# EUROPEAN PATENT APPLICATION

(11) **EP 4 848 026 A1**
(43) Date of publication of application: **02.12.2026**
(21) Application number: 24919566.0
(22) Date of filing: 26.04.2024
(51) Int. Cl.: G05D 3/12

(54) **STEER-BY-WIRE ANGLE FOLLOWING CONTROL METHOD BASED ON LINEAR QUADRATIC REGULATOR**

(30) Priority: 26.01.2024 CN 202410108286
(71) Applicant: Bosch Huayu Steering Systems Co., Ltd., Shanghai 201821 (CN)
(72) Inventor: ZHANG, Dan, Shanghai 201821 (CN); WU, Jianjun, Shanghai 201821 (CN); GAO, Senqi, Shanghai 201821 (CN); LIANG, Dengyu, Shanghai 201821 (CN); JU, Gaolin, Shanghai 201821 (CN); SU, Zhejun, Shanghai 201821 (CN); SUN, Rui, Shanghai 201821 (CN); XU, Jianguo, Shanghai 201821 (CN); SUN, Guoshuai, Shanghai 201821 (CN); HUANG, Gang, Shanghai 201821 (CN)
(74) Representative: Cameron Intellectual Property Ltd
(86) International application number: PCT/CN2024/090052
(87) International publication number: WO 2025/156477

(57) **Abstract**

The present disclosure comprises: on the basis of establishing a dynamic model of a steer-by-wire actuator and converting an equation of the dynamic model into a state-space equation form, obtaining an angle difference and an angular velocity difference, and calculating a control quantity of an LQR controller; using the angle difference and the angular velocity difference as inputs, and constructing a system error equation on the basis of the above state-space equation; solving a Riccati equation using an iterative method to obtain a gain matrix, and, on the basis of the gain matrix, calculating an LQR torque in the design of the LQR controller; by designing an observer, implementing a feedforward compensation strategy and calculating a feedforward torque; and, on the basis of the feedforward torque and the LQR torque, obtaining a total torque input to the system. The disclosure uses the LQR solution to achieve the optimal gain, avoiding repeated parameter trial and error by engineers, while taking into account system convergence speed and system energy consumption. The feedforward is calculated in real time using the observer, enhancing the anti-interference capability of the system and improving system response speed.

## Description

The present disclosure claims the right of priority of Chinese patent application CN 202410108286.9 filed on January 26, 2024. The contents of the Chinese patent application are incorporated herein by reference in its entirety.

### TECHNICAL FIELD

The present disclosure relates to the technical field of steering systems, and in particular to a steer-by-wire angle following control method based on a linear quadratic regulator.

### BACKGROUND

Conventional automotive steering systems achieve wheel steering by a mechanical transmission mechanism being connected to a steering wheel. Steer-by-wire refers to a steering system in which an intermediate shaft connecting the steering wheel and the mechanical transmission mechanism is eliminated, and a steering actuator is controlled by a control method to respond to steering wheel signals, thereby achieving wheel steering. In a steer-by-wire (SBW) system, actual vehicle operating conditions are complex and highly variable. In addition, the introduction of a variable steering ratio imposes higher requirements on steering following performance. Therefore, there is a need for a steering tracking control method having high steering following accuracy and robustness, such that wheels can accurately and rapidly respond to command signals from the steering wheel.

A PID algorithm, which is a control algorithm integrating proportional, integral, and derivative actions, is widely used in steering systems. However, in practical applications, parameter tuning issues exist. It is difficult for engineers to obtain optimal gains during tuning, and the gains directly affect system stability and response speed. In addition, under small-angle steering requests, problems may occur, such as failure to reach a target angle and increased response delay. Gain parameters need to be re-tuned for different systems, resulting in poor parameter universality and inadequate anti-interference capability.

### SUMMARY

In order to overcome the shortcomings of the prior art, the present disclosure provides a steer-by-wire angle following control method based on a linear quadratic regulator (LQR), which uses the LQR solution to achieve the optimal gain, avoiding repeated parameter trial and error by engineers, while taking into account system convergence speed and system energy consumption. The feedforward is calculated in real time by the observer, enhancing the anti-interference capability of the system and improving system response speed.

In order to achieve the above-mentioned objective, a steer-by-wire angle following control method based on a linear quadratic regulator is designed, involving an LQR controller and an observer, characterized in that: the method comprises:
step 1, establishing a dynamic model of a steer-by-wire actuator;
step 2, converting an equation of the dynamic model in step 1 into a state-space equation form;
step 3, obtaining state information of a steering system during design of the LQR controller, the state information comprising a steering wheel angle and an actual steering angle, with an angle difference therebetween being denoted by *e*₁, and a steering wheel angular velocity and an actual angular velocity, with an angular velocity difference therebetween being denoted by *e*₂;
step 4, calculating a control quantity *u* of the LQR controller according to *u = -Ke* ; wherein a gain matrix is $K = {\left[\begin{matrix}{k}_{1} \\ {k}_{2}\end{matrix}\right]}^{T}$, *k*₁ being a gain of the angle difference, and *k*₂ being a gain of the angular velocity difference, and an error matrix is $e = \left[\begin{matrix}{e}_{1} \\ {e}_{2}\end{matrix}\right]$;
step 5, using the angle difference and the angular velocity difference as inputs, and constructing a system error equation on the basis of the state-space equation in step 2;
step 6, solving a Riccati equation using an iterative method to obtain the gain matrix K;
step 7, on the basis of the gain matrix K, calculating an LQR torque *u_{lqr}* in the design of the LQR controller;
step 8, by designing the observer, implementing a feedforward compensation strategy and calculating a feedforward torque *u_{f};* and
step 9, in a steer-by-wire system, determining a total torque input to the system as a sum of the feedforward torque *u_{f}* and the LQR torque *u_{lqr},* and the total torque of the system being: *u* = *u_{lqr}* + *u_{f}.*

The equation of the dynamic model in step 1 is: *Jθ̈ + Bθ̈ = G*₁*Tₘₒₜ + G*₂*F_{fri} + G*₂*F_{rack}* ; wherein *J* and *B* are an equivalent rotational inertia and a damping factor, respectively; *θ* is an actual steering angle; *Tₘₒₜ, F_{fri}* and *F_{rack}* are respectively motor torque, friction and rack force.*G*₁ and *G*₂ are the equivalent steering ratios of friction and rack forces.

The state-space equation in step 2 is: $\left[\dot{X}\right] = \left[\begin{matrix}0 & 1 \\ 0 & {K}_{1}\end{matrix}\right] \left[X\right] + \left[\begin{matrix}0 \\ {K}_{2}\end{matrix}\right] \left[u\right] + \left[\begin{matrix}0 \\ {K}_{3}\end{matrix}\right] \left[{F}_{d}\right] , y = \left[\begin{matrix}1 & 0 \\ 0 & 1\end{matrix}\right] X$ ; wherein $A = \left[\begin{matrix}0 & 1 \\ 0 & {K}_{1}\end{matrix}\right] , E = \left[\begin{matrix}0 \\ {K}_{2}\end{matrix}\right] , F = \left[\begin{matrix}0 \\ {K}_{3}\end{matrix}\right] , C = \left[\begin{matrix}1 & 0 \\ 0 & 1\end{matrix}\right]$, a state variable is $X = \left[\begin{matrix}θ \\ \dot{θ}\end{matrix}\right]$ , an interference resistance is *F_{d}* = *F_{fri} + F_{rack},* a system input quantity is *u* = *Tₘₒₜ,* and y is a system output quantity. Herein, ${K}_{1} = \frac{- B}{J} , {K}_{2} = \frac{{G}_{1}}{J}$, and ${K}_{3} = \frac{{G}_{2}}{J}$.

The LQR controller is a full-state feedback controller.

The system error equation in step 5 is: [*ė*] *= A*[*e*] *+ EK*[*e*]*.*

The specific equation in step 6 is: $JJ = {\int }_{0}^{∞} \left({e}^{T}Qe+{u}^{T}Ru\right) dt$; wherein an error weighting matrix is $Q = \left[\begin{matrix}{q}_{1} & 0 \\ 0 & {q}_{2}\end{matrix}\right]$, and a control-quantity weighting matrix is *R* = 1.

The feedforward compensation is performed with respect to steering interference resistance by using an algorithm, such that an anti-interference capability and a response speed of a time-varying system are improved during control.

In step 7, in the design of the LQR controller, the weighting matrices Q and R remain constant; however, modelling inaccuracies need to be taken into account in practice, and the steer-by-wire system involves simplifications and nonlinear time-varying conditions that reduce a tracking accuracy of the LQR controller, and therefore the feedforward compensation strategy is introduced.

In step 8, when designing the observer, a state-space equation and an output quantity of the steering system are obtained, both of which have been obtained in step 2, and the state-space equation is: $\left[\dot{\hat{X}}\right] = \left[\begin{matrix}0 & 1 & 0 \\ 0 & {K}_{1} & {K}_{3} \\ 0 & 0 & 0\end{matrix}\right] \left[\hat{X}\right] + \left[\begin{matrix}0 \\ {K}_{2} \\ 0\end{matrix}\right] \left[u\right] + L \left(y-\hat{y}\right) , \hat{y} = \left[\begin{matrix}1 & 0 \\ 0 & 1\end{matrix}\right] \hat{X}$; wherein a system state variable of the observer is $\hat{X} = \left[\begin{matrix}\hat{θ} \\ \hat{θ} \\ \hat{{F}_{d}}\end{matrix}\right]$, and an observer gain matrix is $L = \left[\begin{matrix}{l}_{1} & 0 \\ 0 & {l}_{2} \\ 0 & 0\end{matrix}\right]$, wherein *l*₁ and *l*₂ are weightings of deviations, and appropriate gains are selected so as to facilitate rapid convergence of the system.

Compared with the prior art, the present disclosure provides a steer-by-wire angle following control method based on a linear quadratic regulator, which uses the LQR solution to achieve the optimal gain, avoiding repeated parameter trial and error by engineers, while taking into account system convergence speed and system energy consumption. The feedforward is calculated in real time by the observer, enhancing the anti-interference capability of the system and improving system response speed.

### BRIEF DESCRIPTION OF THE DRAWINGS

FIG. 1 is a calculation flowchart according to the present disclosure.
FIG. 2 is a control principle diagram according to the present disclosure.
FIG. 3 is a diagram showing a vehicle response result to a ramp signal according to the present disclosure.
FIG. 4 is a diagram showing a vehicle response result to a sinusoidal signal according to the present disclosure.

### DETAILED DESCRIPTION OF THE PREFERRED EMBODIMENT

The present disclosure is further described below with respect to the accompanying drawings.

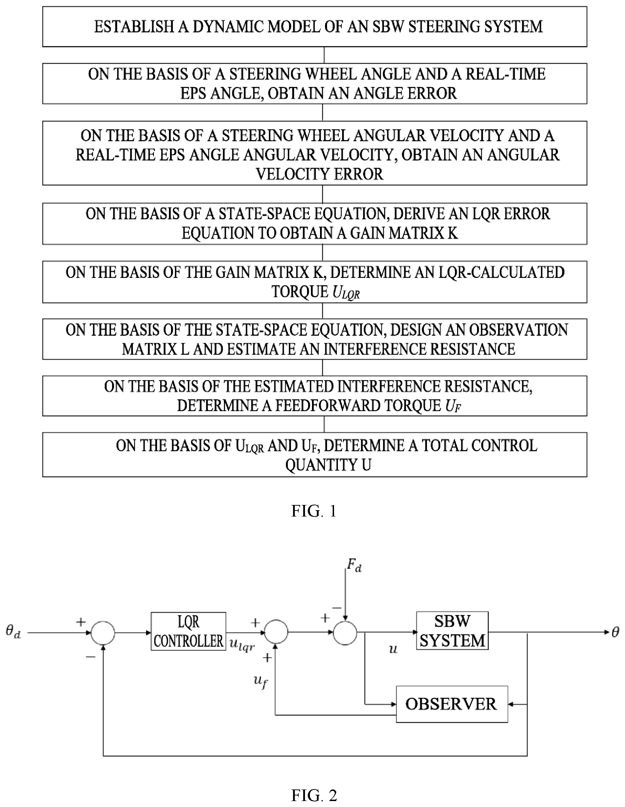

The present disclosure provides an angle following control method based on feedforward linear quadratic regulation. A calculation process of the angle following control method is shown in FIG. 1, and the specific operations are as follows:

In step 1, a dynamic model of a steer-by-wire actuator is established as follows: *Jθ̈ + Bθ̇ = G*₁*Tₘₒₜ + G*₂*F_{fri} + G*₂*F_{rack}* ; wherein *J* and *B* are an equivalent rotational inertia and a damping factor, respectively; *θ* is an actual steering angle; FIG. 2 is a control principle diagram of the angle following control method, wherein *θ_{d}* in FIG. 2 is a requested steering angle; and *Tₘₒₜ, F_{fri}* and *F_{rack}* are a motor torque, a friction force and a rack force, respectively, and *G*₁ and *G*₂ are equivalent steering ratios corresponding to the friction force and the rack force, respectively.

In step 2, the dynamic equation in step 1 is transformed into a state-space equation form as follows: $\left[\dot{X}\right] = \left[\begin{matrix}0 & 1 \\ 0 & {K}_{1}\end{matrix}\right] \left[X\right] + \left[\begin{matrix}0 \\ {K}_{2}\end{matrix}\right] \left[u\right] + \left[\begin{matrix}0 \\ {K}_{3}\end{matrix}\right] \left[{F}_{d}\right] , y = \left[\begin{matrix}1 & 0 \\ 0 & 1\end{matrix}\right] X$; wherein $A = \left[\begin{matrix}0 & 1 \\ 0 & {K}_{1}\end{matrix}\right] , E = \left[\begin{matrix}0 \\ {K}_{2}\end{matrix}\right] , F = \left[\begin{matrix}0 \\ {K}_{3}\end{matrix}\right] , C = \left[\begin{matrix}1 & 0 \\ 0 & 1\end{matrix}\right]$ , a state variable is $X = \left[\begin{matrix}θ \\ \dot{θ}\end{matrix}\right]$, an interference resistance is *F_{d} = F_{fri} + F_{rack},* a system input quantity is *u* = *Tₘₒₜ,* and y is a system output quantity.

In step 3, state information of a steering system is obtained during design of an LQR controller, the state information comprising a steering wheel angle and an actual steering angle, with an angle difference therebetween being denoted by *e*₁, and a steering wheel angular velocity and an actual angular velocity, with an angular velocity difference therebetween being denoted by *e*₂.

In step 4, the LQR controller is designed as a full-state feedback controller, and a control quantity thereof is designed as follows: *u = -Ke,* wherein a gain matrix is $K = {\left[\begin{matrix}{k}_{2} \\ {k}_{2}\end{matrix}\right]}^{T}$*,* and an error matrix is $e = \left[\begin{matrix}{e}_{1} \\ {e}_{2}\end{matrix}\right]$*.*

In step 5, the angle difference and the angular velocity difference are used as inputs, and a system error equation is constructed on the basis of the state-space equation in step 2 as follows: [*ė*] *= A*[*e*] *+ EK*[*e*]*.*

In step 6, the purpose of the LQR controller is to obtain a set of system state variables when the system is stable and the control quantity is sufficiently small by introducing a cost function, and then to solve a Riccati equation using an iterative method to obtain the gain matrix K, specifically as follows: $JJ = {\int }_{0}^{∞} \left({e}^{T}Qe+{u}^{T}Ru\right) dt$; wherein an error weighting matrix is $Q = \left[\begin{matrix}{q}_{1} & 0 \\ 0 & {q}_{2}\end{matrix}\right]$, and a control-quantity weighting matrix is *R* = 1.

In step 7, in the design of the LQR controller, the weighting matrices Q and R remain constant; however, modelling inaccuracies need to be taken into account in practice, and the steer-by-wire system involves simplifications and nonlinear time-varying conditions that reduce a tracking accuracy of the LQR controller, and therefore a feedforward compensation strategy is introduced.

In step 8, the idea of feedforward compensation is performed with respect to steering interference resistance by using an algorithm, such that an anti-interference capability and a response speed of a time-varying system are improved during control. Since the actual interference resistance is difficult to measure by sensors, an observer algorithm is introduced in the disclosure, and is used to supplement sensor information.

In step 9, when designing the observer, a state-space equation and an output quantity of the steering system are obtained, both of which have been obtained in step 2, and the state-space equation is: $\left[\dot{\hat{X}}\right] = \left[\begin{matrix}0 & 1 & 0 \\ 0 & {K}_{1} & {K}_{3} \\ 0 & 0 & 0\end{matrix}\right] \left[\hat{X}\right] + \left[\begin{matrix}0 \\ {K}_{2} \\ 0\end{matrix}\right] \left[u\right] + L \left(y-\hat{y}\right) , \hat{y} = \left[\begin{matrix}1 & 0 \\ 0 & 1\end{matrix}\right] \hat{X}$; wherein a system state variable of the observer is $\hat{X} = \left[\begin{matrix}\hat{θ} \\ \hat{θ} \\ \hat{{F}_{d}}\end{matrix}\right]$, and an observer gain matrix is $L = \left[\begin{matrix}{l}_{1} & 0 \\ 0 & {l}_{2} \\ 0 & 0\end{matrix}\right]$.

In step 10, in a steer-by-wire system, the system input quantity is composed of a feedforward portion and an LQR control portion, and the system control quantity is: *u* = *u_{lqr}* + *u_{f}* ; wherein *u_{lqr}* is an LQR calculation portion, and *u_{f}* is a feedforward calculation portion.

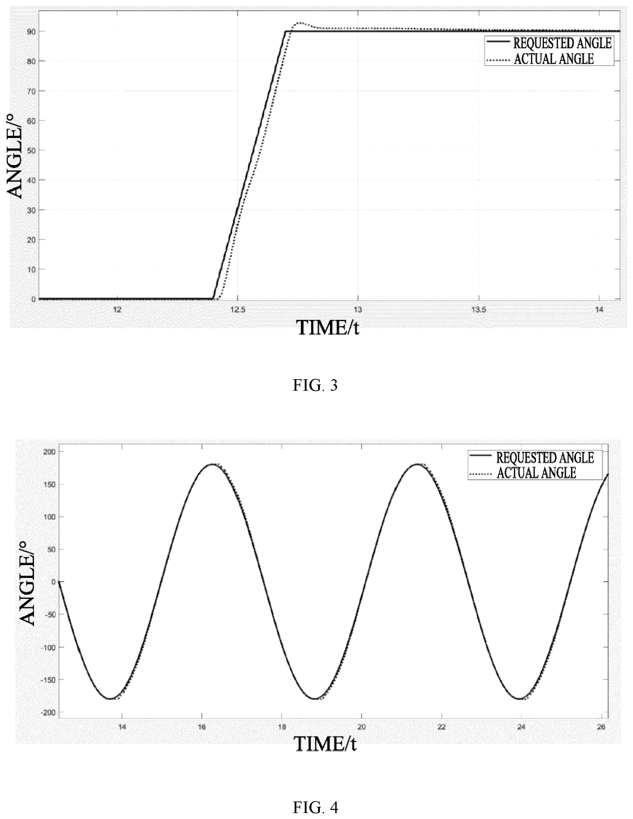

As shown in FIGS. 3 and 4, FIG. 3 is a diagram showing a collected vehicle response result to a ramp signal, in which the solid line corresponds to a ramp requested angle and the dashed line corresponds to an actual angle; and FIG. 4 is a diagram showing a collected vehicle response result to a sinusoidal signal, in which the solid line corresponds to a sinusoidal requested angle and the dashed line corresponds to an actual angle. It can be seen therefrom that, through the configuration of steps 1 to 10, the present disclosure not only reduces the tuning difficulty for engineers, but also improves the response speed and anti-interference capability of the system. Moreover, the problem that a target requested steering angle cannot be reached under a small-angle request is avoided, thereby demonstrating that the present disclosure is better suited for steer-by-wire steering systems requiring high precision.

Although the specific implementations of the present disclosure have been described above, it should be understood by those skilled in the art that these are merely illustrative, and that various changes or modifications can be made to these implementations without departing from the principles and essence of the present disclosure. Accordingly, the scope of protection of the present disclosure is defined by the appended claims.

## Claims

1. A steer-by-wire angle following control method based on a linear quadratic regulator, an LQR controller and an observer being comprised, **characterized in that** the method comprises:
step 1, establishing a dynamic model of a steer-by-wire actuator;
step 2, converting an equation of the dynamic model in step 1 into a state-space equation form;
step 3, obtaining state information of a steering system during design of the LQR controller, the state information comprising a steering wheel angle and an actual steering angle, with an angle difference therebetween being denoted by *e*₁, and a steering wheel angular velocity and an actual angular velocity, with an angular velocity difference therebetween being denoted by *e*₂;
step 4, calculating a control quantity *u* of the LQR controller according to *u = -Ke;* wherein a gain matrix is $K = {\left[\begin{matrix}{k}_{1} \\ {k}_{2}\end{matrix}\right]}^{T}$, and an error matrix is $e = \left[\begin{matrix}{e}_{1} \\ {e}_{2}\end{matrix}\right]$;
step 5, using the angle difference and the angular velocity difference as inputs, and constructing a system error equation on the basis of the state-space equation in step 2;
step 6, solving a Riccati equation using an iterative method to obtain the gain matrix K;
step 7, on the basis of the gain matrix K, calculating an LQR torque *u_{lqr}* in the design of the LQR controller;
step 8, by designing the observer, implementing a feedforward compensation strategy and calculating a feedforward torque *u_{f};* and
step 9, in a steer-by-wire system, determining a total torque input to the system as a sum of the feedforward torque *u_{f}* and the LQR torque *u_{lqr},* and the total torque of the system being: *u* = *u_{lqr}* + *u_{f}.*

2. The steer-by-wire angle following control method based on a linear quadratic regulator according to claim 1, **characterized in that** the equation of the dynamic model in step 1 is: *Jθ + Bθ̇ = G*₁*Tₘₒₜ + G*₂*F_{fri} + G*₂*F_{rack}*; wherein *J* and *B* are an equivalent rotational inertia and a damping factor, respectively; *θ* is an actual steering angle; *Tₘₒₜ, F_{fri}* and *F_{rack}* are a motor torque, a friction force and a rack force, respectively; and *G*₁ and *G*₂ are equivalent steering ratios corresponding to the friction force and the rack force, respectively.

3. The steer-by-wire angle following control method based on a linear quadratic regulator according to claim 2, **characterized in that** the state-space equation in step 2 is: $\left[\dot{X}\right] = \left[\begin{matrix}0 & 1 \\ 0 & {K}_{1}\end{matrix}\right] \left[X\right] + \left[\begin{matrix}0 \\ {K}_{2}\end{matrix}\right] \left[u\right] + \left[\begin{matrix}0 \\ {K}_{3}\end{matrix}\right] \left[{F}_{d}\right] , y = \left[\begin{matrix}1 & 0 \\ 0 & 1\end{matrix}\right] X$ ; wherein $A = \left[\begin{matrix}0 & 1 \\ 0 & {K}_{1}\end{matrix}\right] , E = \left[\begin{matrix}0 \\ {K}_{2}\end{matrix}\right] , F = \left[\begin{matrix}0 \\ {K}_{3}\end{matrix}\right] , C = \left[\begin{matrix}1 & 0 \\ 0 & 1\end{matrix}\right]$ , a state variable is $X = \left[\begin{matrix}θ \\ \dot{θ}\end{matrix}\right]$, an interference resistance is *F_{d} = F_{fri} + F_{rack},* a system input quantity is *u* = *Tₘₒₜ,* and y is a system output quantity.

4. The steer-by-wire angle following control method based on a linear quadratic regulator according to claim 1, **characterized in that** the LQR controller is a full-state feedback controller.

5. The steer-by-wire angle following control method based on a linear quadratic regulator according to claim 3, **characterized in that** the system error equation in step 5 is: [*ė*] *= A*[*e*] *+ EK*[*e*]*.*

6. The steer-by-wire angle following control method based on a linear quadratic regulator according to claim 1, **characterized in that** the specific equation in step 6 is: $JJ = {\int }_{0}^{∞} \left({e}^{T}Qe+{u}^{T}Ru\right) dt$ ; wherein an error weighting matrix is $Q = \left[\begin{matrix}{q}_{1} & 0 \\ 0 & {q}_{2}\end{matrix}\right]$, and a control-quantity weighting matrix is *R* = 1.

7. The steer-by-wire angle following control method based on a linear quadratic regulator according to claim 1, **characterized in that** the feedforward compensation is performed with respect to steering interference resistance by using an algorithm, such that an anti-interference capability and a response speed of a time-varying system are improved during control.

8. The steer-by-wire angle following control method based on a linear quadratic regulator according to claim 1, **characterized in that** in step 7, in the design of the LQR controller, the weighting matrices Q and R remain constant; however, modelling inaccuracies need to be taken into account in practice, and the steer-by-wire system involves simplifications and nonlinear time-varying conditions that reduce a tracking accuracy of the LQR controller, and therefore the feedforward compensation strategy is introduced.

9. The steer-by-wire angle following control method based on a linear quadratic regulator according to claim 1, **characterized in that** in step 8, when designing the observer, a state-space equation and an output quantity of the steering system are obtained, both of which have been obtained in step 2, and the state-space equation is: $\left[\dot{\hat{X}}\right] = \left[\begin{matrix}0 & 1 & 0 \\ 0 & {K}_{1} & {K}_{3} \\ 0 & 0 & 0\end{matrix}\right] \left[\hat{X}\right] + \left[\begin{matrix}0 \\ {K}_{2} \\ 0\end{matrix}\right] \left[u\right] + L \left(y-\hat{y}\right) , \hat{y} = \left[\begin{matrix}1 & 0 \\ 0 & 1\end{matrix}\right] \hat{X}$ ; wherein a system state variable of the observer is $\hat{X} = \left[\begin{matrix}\hat{θ} \\ \hat{θ} \\ \hat{{F}_{d}}\end{matrix}\right]$ , and an observer gain matrix is $L = \left[\begin{matrix}{l}_{1} & 0 \\ 0 & {l}_{2} \\ 0 & 0\end{matrix}\right]$.
